# EUROPÄISCHE PATENTSCHRIFT

(11) **EP 3 838 816 B1**
(45) Veröffentlichungstag und Bekanntmachung des Hinweises auf die Patenterteilung: **15.01.2025**
(21) Anmeldenummer: 20212640.5
(22) Anmeldetag: 09.12.2020
(51) Int. Cl.: B65G 59/02

(54) **VORRICHTUNG SOWIE EIN VERFAHREN ZUM ENTPALETTIEREN EINES STÜCKGUTES AUS EINEM STATIONÄREN STAPELVERBUND**
DEVICE AND METHOD FOR DEPALLETIZING A PIECE GOOD FROM A STATIONARY STACK
DISPOSITIF AINSI QUE PROCÉDÉ DE DÉPALETTISATION D'UNE MARCHANDISE EN VRAC D'UN EMPILEMENT STATIONNAIRE

(30) Priorität: 18.12.2019 DE 102019220027
(43) Veröffentlichungstag der Anmeldung: 23.06.2021
(73) Patentinhaber: Premium Robotics GmbH, 70771 Leinfelden-Echterdingen (DE)
(72) Erfinder: Leckel, Tim, 70771 Leinfelden-Echterdingen (DE); Diel, Kai, 70771 Leinfelden-Echterdingen (DE)
(74) Vertreter: Rösler, Uwe

(56) Entgegenhaltungen:
- DE-A1- 4 218 468
- DE-U1- 212009 000 069
- JP-A- H0 769 455
- JP-A- H04 303 330
- JP-A- H06 144 577
- JP-A- H08 258 911
- JP-A- H10 310 257

## Beschreibung

### Technisches Gebiet

Beschrieben wird eine Vorrichtung zum Entpalettieren von in einem stationären Stapelverbund längs einzelner Stapelebenen angeordneten Stückgütern, mit einer räumlich zum Stapelverbund positionierbaren Greifvorrichtung, die durch einseitige Ineingriffnahme mit einem Stückgut und nachfolgendem Ankippen und Unterfahren des Stückgutes zur vereinzelten Stückgutaufnahme befähigt ist sowie mit einem leistenförmig ausgebildeten, über eine Leistenlängserstreckung verfügenden, an einer Stützstruktur räumlich positionierbar angeordneten mechanischen Anschlag mit einer stützplattenartig ausgebildeten Begrenzungsstruktur, der jeweils an einem aufzunehmenden Stückgut gegenüberliegend zur Greifvorrichtung im Bereich der Stapelebene des Stückgutes positionierbar und mit dem Stückgut zur Anlage bringbar und derart ausgebildet ist, dass bei Ineingriffnahme der Greifvorrichtung mit dem Stückgut und gleichzeitigem mechanischen Zusammenwirken zwischen Stückgut und dem Anschlag ein um eine durch den mechanischen Anschlag vorgegebene Kippachse orientiertes Kippmoment auf das Stückgut wirkt.

So besteht in der Intralogistik beim automatisierten Entpalettieren, Kommissionieren und Umpalettieren eine besondere Herausforderung darin, die große Varianz der handzuhabenden Stückgüter mit einem universellen Greifer zu bewältigen. Um diesen Anforderungen gerecht zu werden wurde das Prinzip des Aufwälzgreifers entwickelt. Derartige Aufwälzgreifer verfügen über einen Aufnahmebereich zumeist in Form einer angetriebenen Gummirolle oder eines über eine Rolle geführten Förderbandes, die bzw. das gegen eine dem Aufwälzgreifer zugewandte Stirnseite eines aufzunehmenden Stückgutes gedrückt wird, wodurch die Gummirolle bzw. das über eine Rolle geführte Förderband eine lokale Reibschlußverbindung mit dem aufzunehmenden Objekt Stückgut ausbildet und das Objekt aufgrund des Rollen- bzw. Förderbandantriebes lokal anhebt bzw. ankippt, wodurch sich ein Spalt zwischen Objekt und dessen ursprünglicher Auflagefläche ausbildet, in den der zumeist keilförmig ausgebildete Aufwälzgreifer einfährt und das Objekt unterfährt, um es vollständig auf dem Aufwälzgreifer aufliegend aufzunehmen.

### Stand der Technik

Aufwälzgreifer sind in den unterschiedlichsten Ausführungsformen bekannt, beispielsweise in Form eines einzigen Aufnahmemoduls mit wenigstens einem über zwei Rollen umlaufenden Förderband gemäß der Druckschrift GB 1 559 973 A, oder mit zwei parallel zueinander orientierten Aufwälzgreifermodulen, deren Querabstand variabel einstellbar ist, gemäß der Druckschrift DE 10 2012 009 649 B4, um nur einige zu nennen. Unabhängig von der Ausgestaltung eines Aufwälzgreifers gilt es zur Stückgutaufnahme dafür zu sorgen, das aufzunehmende Stückgut gegen ein rückwärtiges Wegrutschen zu sichern, während der Aufwälzgreifer durch stirnseitigen Reibschlusskontakt an der Stückgutvorderseite das Stückgut einseitig anhebt. Hierzu dient in aller Regel ein mechanischer Anschlag zumeist in Form einer stationären Rückwand oder einer Seitenfläche eines unmittelbar benachbart längs der Stapelebene gelagerten Stückgutes, an der das aufzunehmende Stückgut mit seiner der Greifvorrichtung gegenüber liegenden Rückseite zumeist vollflächig anliegt. Durch die rückseitige, vollflächige Anlage des aufzunehmenden Stückgutes wird der Aufnahmevorgang mit Hilfe eines Aufwälzgreifers insofern erschwert, zumal für ein ungehindertes Ankippen des Stückgutes um die hintere Stückgutunterkante die hintere Stückgutoberkante frei beweglich nach hinten schwenken müsste. Dieser freie Schwenkvorgang wird jedoch durch die ganzflächige Anlage der Stückgutrückseite an der Rückwand zumindest behindert. Zudem wird das aufzunehmende Stückgut je nach Steifigkeit der Umverpackung aufgrund der einwirkenden Aufwälzkräfte sowie der horizontalen Gegenkraft der Rückwand teilweise deformiert, wodurch Schäden am Stückgut nicht ausgeschlossen werden können.

Die Druckschrift DE 42 18 468 A1 offenbart ein Verfahren sowie eine Vorrichtung zum Aufnehmen einer Last von einem Stapel, der lagenweise mit einem über Rollen verfügenden Aufnahmetisch entpalletiert wird. Hierzu werden die in einer Stapelebene hintereinander angeordneten Stückgüter gesamtheitlich zwischen zwei Stopper kraftbeaufschlagt gegriffen und etwas angehoben, während der Aufnahmetisch unter die Stückgüter verfährt.

Die Druckschrift EP 2 923 975 A1 offenbart eine Depalletiervorrichtung zu Entnahme von Lagen aus Paketen von einem Gutstapel. Hier wirken eine Haltevorrichtung, die rückwärtig am oberen Bereich an der Pallettenlage zur Anlage gebracht wird, mit einem horizontal gegen die Pallettenlage längs der Pallettenauflagebene verfahrbaren Aufnahmetisch mit einer keilförmig ausgebildeten Einschubleiste zusammen.

Die Druckschrift WO 2009/043151 A1 offenbart eine Roboterarm getragene Entpalletiervorrichtung mit einer Schubvorrichtung und einem Aufnahmetisch. Die Schubvorrichtung drückt im oberen Bereich an ein aufzunehmendes Stückgutes während der Aufnahmetisch unter das Stückgut verfährt.

Auch kommt es in der Logistik häufig vor, dass die einzelnen innerhalb eines Stapelverbundes angeordneten Stückgüter nicht perfekt geometrisch relativ zueinander fluchtend ausgerichtet sind. Im Stapelverbund unter den einzelnen Stückgütern auftretende vertikale und/oder horizontale Unter- und/oder Überstände zwischen jeweils benachbarten Stückgütern können sich nachteilig auf den Aufwälzprozess auswirken. Weitere Probleme für den Aufwälzprozess entstehen, wenn die einzelnen Stückgüter nicht einheitlich um die Vertikalachse orientiert, sondern schräg zur jeweiligen Rückwand platziert sind. In diesem Fall ist es nicht ausgeschlossen, dass der Aufwälzgreifer das aufzunehmende Stückgut punktuell erstkontaktiert, wodurch das Stückgut parallel zur Aufnahmekante des Aufwälzgreifers gedreht wird, um es im Rahmen der sich daran anschließenden Reibschlussverbindung anzukippen und aufzunehmen. Auch in diesem Fall sind Beschädigungen an dem aufzunehmenden Stückgut nicht auszuschließen.

Die Druckschrift JP H07 69455 A offenbart eine Stückgutaufnahmeeinheit mit einem räumlich positionierbaren Aufwälzmodul sowie einem gemeinsam mit dem Aufnahmemodul räumlich positionierbaren, mechanischen Anschlag, der während des Aufnahmevorgangs jeweils relativ zum Aufwälzmodul hinter das jeweils aufzunehmende Stückgut als Gegenlager positioniert wird. Zudem ist eine pneumatische Kipp- bzw. Hubeinheit vorgesehen, durch die das jeweils aufzunehmende Stückgut angekippt bzw. angehoben werden kann, um so ein Unterfahren des Aufwälzmoduls unter das jeweilige Stückgut zu erleichtern.

Die in der Druckschrift JP H10 310257 A beschriebene Stückgutaufnahmeeinheit sieht einen vertikal positionierbaren Stapelverbund vor, dessen jeweils oberste Stückgutlage passend zur räumlichen Lage einer Entpalettieranordnung positioniert wird, die über einen horizontal verfahrbaren Aufwälzgreifer verfügt. In Bewegungsrichtung des horizontal verfahrbaren Aufwälzgreifermoduls ist zum Zwecke einer Stückgutaufnahme hinter dem Stückgut ein mechanisches Gegenlager angeordnet, das über eine fest arretierte Anschlagfläche verfügt, die gegenüber der Vertikalen geneigt ist.

Die Druckschrift JP H08 258911 A beschreibt eine Anordnung zum Entpalettieren von in einem Stapelverbund angeordneten Stückgütern, die auf einer vertikal verfahrbaren Hebeanordnung aufliegen, so dass die jeweils oberste Stückgutlage relativ zu einer motorisch angetriebenen Rollenanordnung positionierbar ist, die zur Stückgutaufnahme längs zur obersten Stapelebene unter die aufzunehmenden Stückgüter verfahren wird. JP H04 303330 A offenbart eine Vorrichtung gemäß dem Oberbegriff des Anspruchs 1.

### Darstellung der Erfindung

Der Erfindung liegt die Aufgabe zugrunde eine Vorrichtung zum Entpalettieren von in einem stationären Stapelverbund längs einzelner Stapelebenen angeordneten Stückgütern, mit einer räumlich zum Stapelverbund positionierbaren Greifvorrichtung, die durch einseitige Ineingriffnahme mit einem Stückgut und nachfolgendem Ankippen und Unterfahren des Stückgutes zur vereinzelten Stückgutaufnahme befähigt ist, derart auszubilden, dass die vorstehend genannten Nachteile vermieden werden sollen und der für den Stückgutaufnahmevorgang erforderliche Kraft- und Energieaufwand reduziert werden sollen. Insbesondere gilt es die Stückgutaufnahme schadlos für das Stückgut zu realisieren und ferner Maßnahmen zu treffen, die ein schnelles und sicheres Entpalletieren eines Stapelverbundes von Stückgütern ermöglichen.

Die Lösung der der Erfindung zugrunde liegenden Aufgabe ist im Anspruch 1 angegeben. Den Erfindungsgedanken in vorteilhafter Weise ausbildende Merkmale sind Gegenstand der Unteransprüche sowie der weiteren Beschreibung, insbesondere unter Bezugnahme auf die Ausführungsbeispiele zu entnehmen.

Lösungsgemäß zeichnet sich die Vorrichtung zum Entpalletieren von Stückgütern aus einem Stapelverbund gemäß den Merkmalen des Oberbegriffes des Anspruches 1 dadurch aus, dass ein räumlich positionierbarer, mechanischer Anschlag vorgesehen ist, der jeweils an einem aufzunehmenden Stückgut gegenüberliegend zur Greifvorrichtung im Bereich der Stapelebene des Stückgutes positionierbar und mit dem Stückgut zur Anlage bringbar und derart ausgebildet ist, dass bei Ineingriffnahme der Greifvorrichtung mit dem Stückgut und gleichzeitigem mechanischen Zusammenwirken zwischen Stückgut und dem Anschlag ein um eine durch den mechanischen Anschlag vorgegebene Kippachse orientiertes Kippmoment auf das Stückgut wirkt. Der Anschlag ist leistenförmig ausgebildet und weist eine Leistenlängserstreckung auf. Eine unmittelbar hinter dem Stapelverbund angeordnete Stützstruktur ist vorgesehen ist, an der höhen-(z) sowie auch horizontalverstellbar (x) der mechanische Anschlag sowie eine daran fest angebrachte Begrenzungsstruktur angebracht sind. Die Stützstruktur besteht aus einem Rahmengestellt, dessen Größe und Form mit einem entsprechenden Übermaß an die Größe und Form des Stapelverbundes angepasst ist, wobei die profilrahmenartig ausgebildete Stützstruktur derart groß dimensioniert ist, so dass der auf einer Palette angeordnete Stapelverbund durch die Stützstruktur hindurch gefahren werden kann, sofern der mechanische Anschlag sowie die stützplattenartig ausgebildete Begrenzungsstruktur in eine höchste vertikale Position verfahren ist.

Der mechanische Anschlag weist eine Leistenlängserstreckung auf, durch die die Kippachse vorgegeben ist.

Das Stückgut wird durch eine mechanisch vorgegebene Kippkante, die das Stückgut gegenüber einem rückwärtigen Hindernis, beispielsweise einer Rückwand, beabstandet, so dass der Kippvorgang des aufzunehmenden Stückgutes mit Hilfe der Greifvorrichtung behinderungsfrei durchgeführt werden kann. Der mechanische Anschlag, der längs der unteren Hinterkante des Stückgutes positioniert wird, während die Greifvorrichtung zum Zwecke des Ankippens und Aufnehmens des Stückgutes im Bereich der vorderen Unterkante mit dem Stückgut in Kontakt tritt, stützt und stabilisiert die hintere Unterkante des anzukippenden Stückgutes. Zudem ist eine Maßnahme zur Kippbegrenzung vorgesehen, indem zusätzlich eine Begrenzungsstruktur, vorzugsweise in Art einer Rückwand, mit dem mechanischen Anschlag derart kombiniert ist, dass die Begrenzungsstruktur relativ zum mechanischen Anschlag zu der Greifvorrichtung sowie auch einem aufzunehmenden Stückgut gegenüberliegend angeordnet ist, d.h. der mechanische Anschlag beabstandet die Begrenzungsstruktur von einem jeweils aufzunehmenden Stückgut, dessen untere Hinterkante in Kontakt mit dem mechanischen Anschlag steht. Auf diese Weise ist gewährleistet, dass genügend freier Abstand zwischen der oberen Hinterkante des Stückgutes und der Begrenzungsstruktur vorhanden ist, um den Kippvorgang möglichst behinderungsfrei und unter Einsatz möglichst geringer Kippkräfte, die von Seiten der Greifvorrichtung initiiert werden, vornehmen zu können.

Die Form und Dimension des mechanischen Anschlages sowie Form und Größe der Begrenzungsstruktur sind an die Art, Beschaffenheit, Größe und Form der jeweiligen Stückgüter derart angepasst, so dass sichergestellt wird, dass einerseits das Ankippen und Aufnehmen des jeweiligen Stückgutes mit Hilfe der Greifvorrichtung sicher und für das Stückgut schonend durchgeführt werden kann und andererseits dafür Sorge getragen wird, dass durch die Begrenzungsstruktur ein unkontrolliertes, rückwärtiges Umkippen des Stückgutes ausgeschlossen werden kann.

Das Vorsehen eines definierten mechanischen Anschlages zur Unterstützung des Ankippvorganges eines Stückgutes zum Zwecke der Entpalletierung mit Hilfe einer vorzugsweise in Art eines Aufwälzgreifers ausgebildeten Greifvorrichtung ermöglicht ein Verfahren zum schonenden Entpalletieren, bei dem ein mechanischer Anschlag an ein aufzunehmendes Stückgut gegenüberliegend zur Greifvorrichtung im Bereich der Stapelebene positioniert wird. Anschließend kontaktiert die Greifvorrichtung das Stückgut derart, dass durch mechanisches Zusammenwirken von Stückgut, Greifvorrichtung und dem stationär positionierten mechanischen Anschlag ein um eine durch den mechanischen Anschlag vorgegebene Kippachse orientiertes Kippmoment auf das Stückgut derart wirkt, so dass sich, der Greifvorrichtung zugewandt, ein keilförmiger Spalt zwischen dem Stückgut und der Stapelebene öffnet, in den die Greifvorrichtung einfährt und das Stückgut unterfährt. Schließlich kann das Stückgut mit Hilfe der Greifvorrichtung aus dem Stapelverbund entnommen werden.

Zur Erläuterung der lösungsgemäßen Vorrichtung sowie deren bevorzugte Weiterbildungen sei auf die nachfolgenden illustrierten Ausführungsbeispiele verwiesen, die einzeln oder in Kombination realisierbar sind.

### Kurze Beschreibung der Erfindung

Die Erfindung wird nachstehend anhand von Ausführungsbeispielen unter Bezugnahme auf die Zeichnungen exemplarisch beschrieben. Es zeigen:
- Fig. 1a,b: mechanischer Anschlag mit Rückwand zur Unterstützung des Kippvorganges,
- Fig. 2a,b,c: alternative Ausgestaltung des mechanischen Anschlages mit drehbarer Lagerung der Kippkante,
- Fig. 3: vertikale Höhenverstellung des mechanischen Anschlages relativ zu einzelnen Stapelebenen,
- Fig. 4a,b: Schräg- und Seitendarstellung einer Stützstruktur zur vertikalen sowie horizontalen Positionierung des mechanischen Anschlages mit Begrenzungsstruktur,
- Fig. 5a,b,c: Illustration unterschiedlicher Stückgutentnahmekonstellationen,
- Fig. 6a,b: mechanischer Anschlag mit Begrenzungsstruktur mit, um die Vertikalachse schwenkbarer Kinematik,
- Fig. 7: Sensorik zur Erfassung und Überwachung eines zu entnehmenden Stückgutes sowie Relativpositionierung des mechanischen Anschlages relativ zu einem Stapelverbund,
- Fig. 8a-f: alternative Ausführungsformen zur Unterstützung des Kippvorganges des Stückgutes um einen mechanischen Anschlag sowie
- Fig. 9a-d: unterschiedliche Ausführungsformen zur räumlichen Positionierung des mechanischen Anschlages und/oder einer Begrenzungsstruktur.

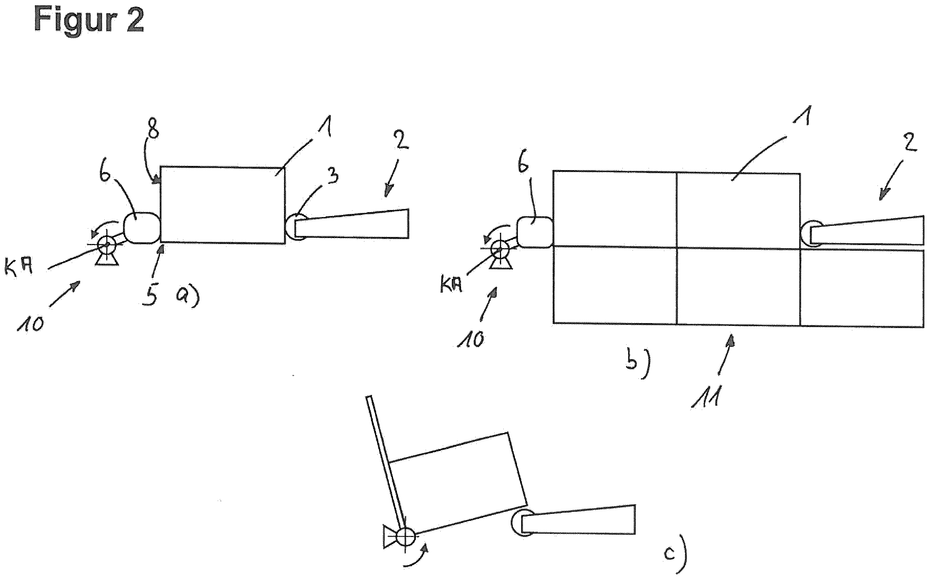

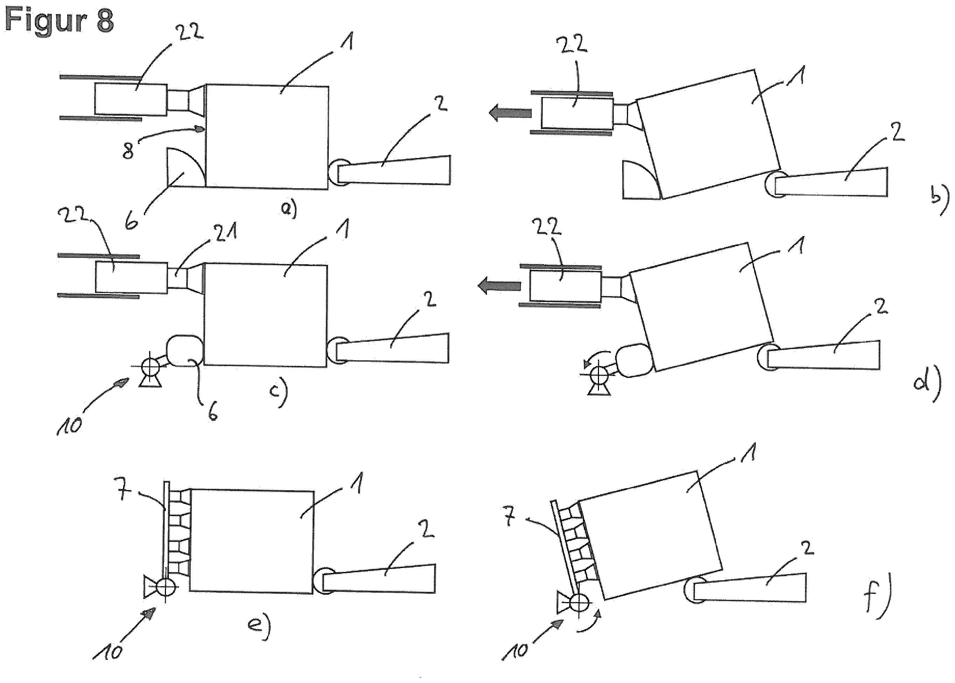

Die Ausführungsformen gemäß den Figuren 2a, 2b, 8a, 8b, 8c und 8d offenbaren keine fest am Anschlag (6) angebrachte Begrenzungsstruktur (7) und sind somit nicht Teil der Erfindung.

### Wege zur Ausführung der Erfindung, gewerbliche Verwendbarkeit

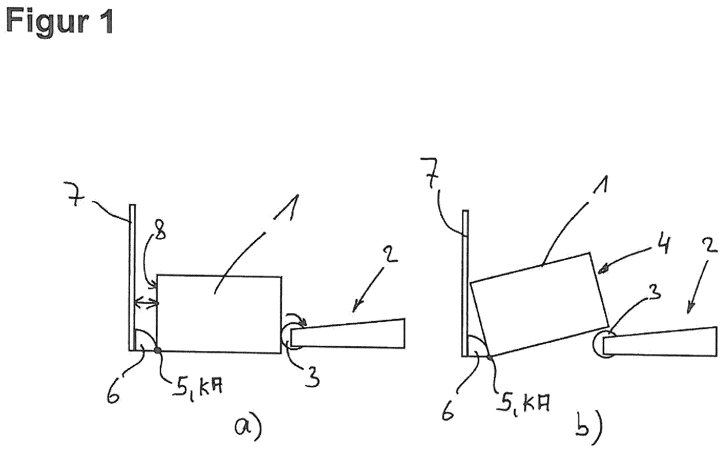

Figur 1a zeigt in schematischer Darstellung ein Stückgut 1, das mit Hilfe einer Greifvorrichtung 2, vorzugsweise in Form eines Aufwälzgreifers, der über ein stirnseitig drehbar gelagertes Reibschlusselement 3 verfügt, aufgenommen werden soll. Hierzu kontaktiert die Greifvorrichtung 2 das aufzunehmende Stückgut 1 an dessen Vorderseite 4 im Bereich der Unterkante und übt auf das Stückgut 1 aufgrund der in Figur 1a illustrierten Rollen- bzw. Drehbewegung des Reibschlusselementes 3 ein auf das Stückgut 1 um die hintere Unterkante 5 des Stückgutes 1 orientiertes Ankippmoment aus. Um zu verhindern, dass das Stückgut 1 aufgrund der auf das Stückgut 1 durch die Greifvorrichtung 2 wirkenden Kräfte, in der Darstellung gemäß der Figuren 1 a, b nach links wegrutscht, ist ein mechanischer Anschlag 6 unmittelbar angrenzend an der hinteren Unterkante 5 des Stückgutes 1 stationär angeordnet. Der mechanische Anschlag 6 definiert somit eine raumfeste Kippachse KA, die in der Darstellung gemäß Figur 1 mit der hinteren Unterkante 5 des Stückgutes 1 zusammenfällt. Der mechanische Anschlag 6 ist vorzugsweise leistenförmig ausgebildet und erstreckt sich längs der gesamten hinteren Unterkante 5 des Stückgutes 1. Der mechanische Anschlag 6 weist im Fall der Figuren 1a, b einen Querschnitt in Art eines Viertelkreises auf, kann jedoch auch beliebig andere Querschnittsformen annehmen, die den Kippvorgang des Stückgutes 1 als solchen unterstützen, bspw. rechteckig oder dreieckförmig.

Zusätzlich ist am mechanischen Anschlag 6 eine Begrenzungsstruktur 7 in Form einer hinteren Begrenzungswand angebracht, die eine vertikale Erstreckung besitzt, die größer ist als die vertikale Höhe des mechanischen Anschlages 6. Die Begrenzungsstruktur 7 ist am mechanischen Anschlag 6 derart angebracht, dass im nicht angekippten Zustand des Stückgutes 1, siehe Figur 1a, die Begrenzungsstruktur 7 zur Rückseite 8 des Stückguts 1 einen Abstand 9 besitzt, der durch die Breite des mechanischen Anschlages 6 vorgegeben ist.

Die Begrenzungsstruktur 7 dient als Kippschutz für das Stückgut 1, wodurch verhindert wird, dass das Stückgut 1 beim Ankippen und Unterfahren des Stückgutes 1 mit der Greifvorrichtung 2, siehe Figur 1b, nicht unkontrolliert um die Kippachse KA zu kippen vermag.

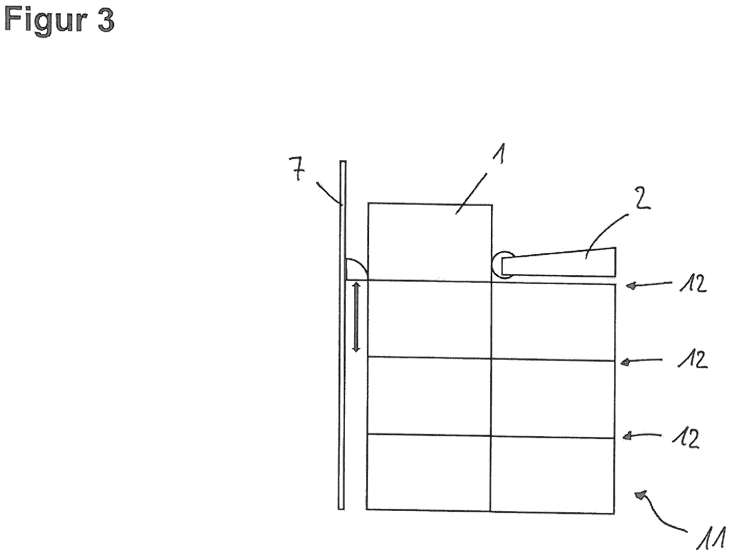

In vorteilhafter Weise sind der mechanische Anschlag 6 und die Begrenzungsstruktur 7 gemäß der Figuren 1 a und b fest miteinander verbunden sind und mit Hilfe einer geeigneten Manipulatoreinheit räumlich an die hintere Unterkante des aufzunehmende Stückgutes 1 zu positionieren. Alternativ ist es ebenso denkbar, die Begrenzungsstruktur 7 sowie auch den mechanischen Anschlag 6 als jeweils separate Baueinheiten auszuführen und in vergleichbarer Weise räumlich positionierbar zu lagern, siehe bspw. Figur 3, auf die etwas später Bezug genommen wird.

Alternativ zu einer stationären Lagerung zumindest des mechanischen Anschlages 6 relativ zur hinteren Unterkante 5 des aufzunehmenden Stückgutes 1 sehen die in Figur 2a bis c illustrierten Ausführungsbeispiele eine drehbare Lagerung des mechanischen Anschlages 6 vor, so dass während der Kippbewegung des Stückgutes 1 keine Relativbewegung zwischen dem Stückgut 1 und dem mechanischen Anschlag 6 stattfindet.

Durch Verhindern von Relativbewegungen zwischen dem mechanischen Anschlag 6 und dem aufzunehmendem Stückgut 1 wird die Beschädigungsgefahr für das Stückgut weiter erheblich gesenkt. Der in den Figuren 2a und b gleichfalls leistenförmig ausgebildete mechanische Anschlag 6 tritt bereichsweise in flächigen Kontakt mit der Rückseite 8 des Stückgutes 1 unmittelbar oberhalb der hinteren Unterkante 5. Der mechanische Anschlag 6 ist an einem Ein-Achsdrehlager 10 schwenkbar gelagert. Das Drehlager 10 ist vorzugsweise als ein passives Drehlager ausgebildet, das durch das von der Greifvorrichtung 2 herrührende und auf das Stückgut 1 wirkende Kippmoment um die Kippachse KA, die im gezeigten Ausführungsbeispiel nicht mit der hinteren Unterkante 5 des Stückgutes 1 zusammenfällt, ausgelenkt wird.

In Figur 2b ist ein Stapelverbund 11 bestehend aus 5 Stückgütern 1 dargestellt. Das Ein-Achsdrehlager 10 und der daran fest angebrachte mechanische Anschlag 6 sind mit Hilfe einer nicht dargestellten Manipulatoreinheit derart räumlich frei positionierbar, so dass der mechanische Anschlag 6 an der Rückseite 8 des Stückgutes 1 im Bereich der hinteren Unterkante 5 flächig anliegt. Durch die flächige Ausgestaltung der Kontaktfläche zwischen mechanischem Anschlag 6 und dem aufzunehmendem Stückgut 1 kann auf eine den Kippvorgang begrenzende Begrenzungsstruktur, wie auch in Figur 2a, verzichtet werden.

Nach Aufnahme und Entnahme eines jeweils zu entnehmenden Stückgutes 1 erfolgt die Rückstellung des nach oben ausgelenkten mechanischen Anschlags 6 entweder allein auf der Grundlage der wirkenden Schwerkraft oder mit Hilfe eines aktiven oder passiven Kraftelementes, das mittel- oder unmittelbar mit dem Ein-Achsdrehlager 10 zusammenwirkt.

In Figur 2c ist ein Ausführungsbeispiel gezeigt, bei dem der mechanische Anschlag durch eine unmittelbar an einem Ein-Achsdrehlager 10 angebrachte flächige Begrenzungsstruktur 7 realisiert ist. In diesem Fall fällt die hintere Unterkante 5 des aufzunehmenden Stückgutes 1 mit der Unterkante der flächig ausgebildeten Begrenzungsstruktur 7 zusammen, die zudem mit der Drehachse bzw. Kippachse KA des Ein-Achsdrehlagers 10 zusammenfällt.

Figur 3 zeigt einen Stapelverbund 11 bestehend aus einzelnen Stückgütern 1, die jeweils in vertikal übereinander angeordneten Stapelebenen 12 angeordnet sind. Zum schnellen Entpalletieren ist rückseitig zum Stapelverbund 11 eine Begrenzungsstruktur 7 angebracht, deren vertikale Erstreckung größer als die vertikale Stapelhöhe des Stapelverbundes 11 ist. Zum schnellen und sicheren Entpalletieren ist der mechanische Anschlag 6 längs der Begrenzungsstruktur 7 vertikal positionierbar. Die Positionierung kann entweder manuell oder motorisch erfolgen und richtet sich jeweils nach der vertikalen Lage jener Stapelebene 12 von der ein Stückgut 1 aufzunehmen ist. Die wandartig ausgebildete Begrenzungsstruktur 7 dient zum Schutz vor einem vollständigen Überkippen des jeweils aufzunehmenden Stückgutes 1 und sorgt für eine schonende und schadlose vereinzelte Stückgutaufnahme mit Hilfe der Greifvorrichtung 2.

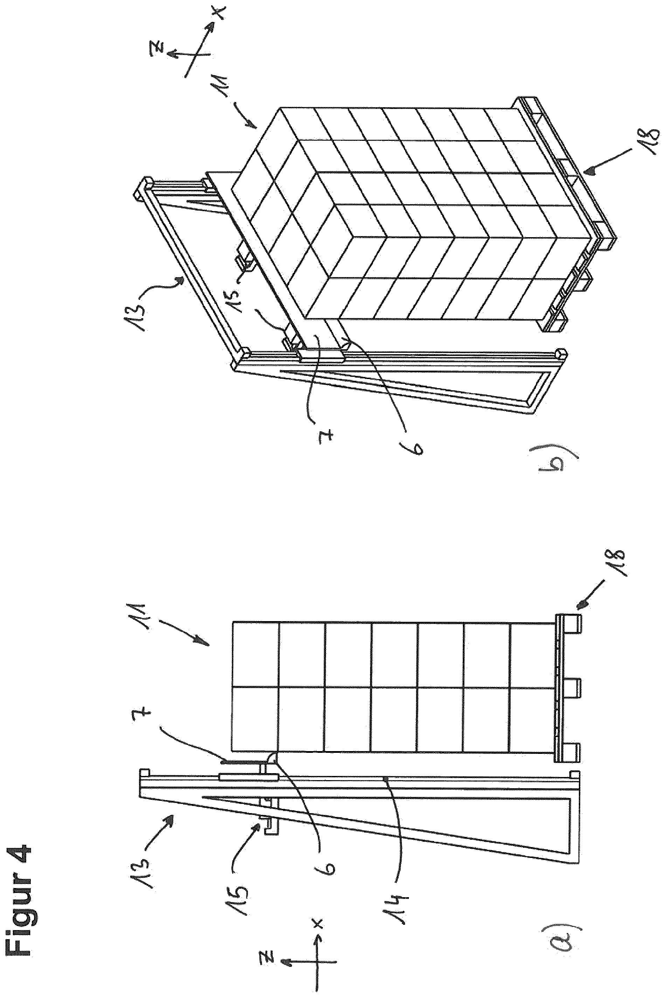

In den Figuren 4 a, b ist eine Seiten- sowie Schrägansicht auf einen Stapelverbund 11 sowie auf eine unmittelbar hinter dem Stapelverbund 11 angeordnete Stützstruktur 13 dargestellt, an der höhen- (z) sowie auch horizontalverstellbar (x) ein mechanischer Anschlag 6 sowie eine daran fest angebrachte Begrenzungsstruktur 7 angebracht sind. Die Stützstruktur 13 besteht aus einem Rahmengestellt, dessen Größe und Form mit einem entsprechenden Übermaß an die Größe und Form des Stapelverbundes 11 angepasst ist. Die profilrahmenartig ausgebildete Stützstruktur 13 ist vorzugsweise derart groß dimensioniert, so dass der auf einer Palette 18 angeordnete Stapelverbund 11 durch die profilrahmenartig ausgebildete Stützstruktur 13 hindurch gefahren werden kann, sofern der mechanische Anschlag 6 sowie die stützplattenartig ausgebildete Befestigungsstruktur 7 in die höchste vertikale Position verfahren ist. Dies eröffnet Vorteile in Bezug auf Platzersparnis sowie auch einem schnelleren Austausch leerer sowie auch voller Paletten.

Die Einheit bestehend aus dem mechanischen Anschlag 6 sowie der stützplattenartig ausgebildeten Begrenzungsstruktur 7 ist einerseits längs einer vertikalen Führungsschiene 14 vertikal (z) positionierbar und andererseits vermittels zweier horizontaler Führungsschienen 15, von denen wenigstens eine motorisch angetrieben ist, in Horizontalrichtung (x) positionierbar. Mit Hilfe der motorisch angetriebenen horizontalen Führungsschienen 15 kann der mechanische Anschlag 6 und die mit diesem fest verbundene, als Stützplatte ausgebildete Begrenzungsstruktur 7 individuell an die hintere Unterkante 5 eines jeweils aufzunehmenden Stückgutes 1 gefahren bzw. positioniert werden.

Als Antriebseinheit für die Vertikalverstellung des mechanischen Anschlages 6 sowie der stützplattenartig ausgebildeten Befestigungsstruktur 7 längs der profilrahmenartig ausgebildeten Stützstruktur 13 eignen sich vorzugsweise Riemenantriebe, die einen schnellen Antrieb realisieren und große Wegstrecken in kurzer Zeit zu bewältigen vermögen.

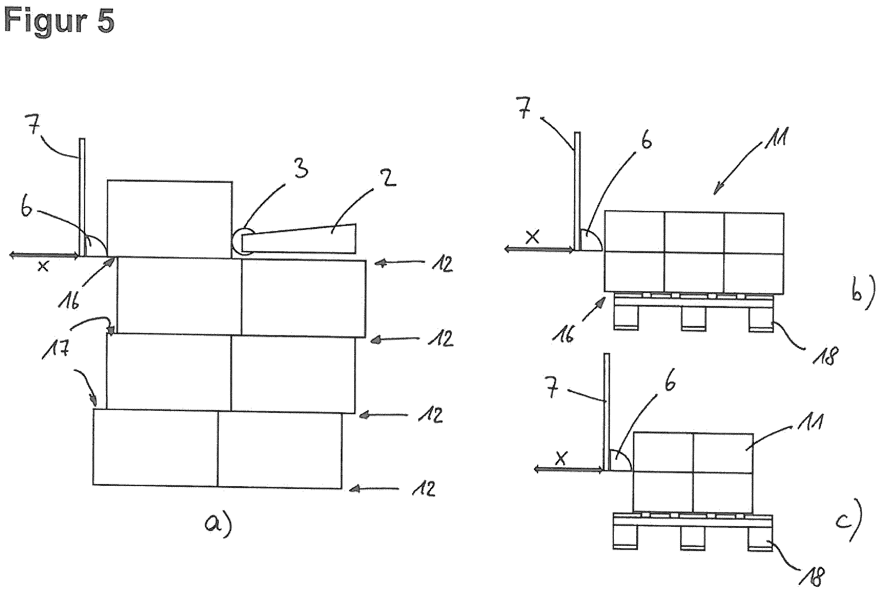

Häufig kommt es vor, dass in realen Stapelverbunden 11 die Lage der einzelnen Stückgüter 1 von einer idealen vertikalen und horizontalen Relativausrichtung zueinander abweichen. Figur 5a illustriert dies. Die Stückgüter 1 können in unterschiedlichen Stapelebenen 12 mit Überständen 16 oder Unterständen 17 angeordnet sein. Durch die horizontale Auslenkbarkeit des mechanischen Anschlages 6 gemeinsam mit der Begrenzungsstruktur 7 können derartige Lageabweichungen ausgeglichen werden.

In Figur 5b ist ein einheitlicher Stapelverbund 11 illustriert, der seitlich über eine Palette 18 übersteht. In Figur 5c ist eine Situation dargestellt, bei der ein Stapelverbund 11 kleiner dimensioniert ist als die von der Palette 18 vorgegebene Palettengröße. Durch die horizontale Verstellbarkeit des mechanischen Anschlages 6 mit der daran fest angebrachten Begrenzungsstruktur 7 können derartige Abweichungen von Standardstapelverbunden individuell ausgeglichen werden.

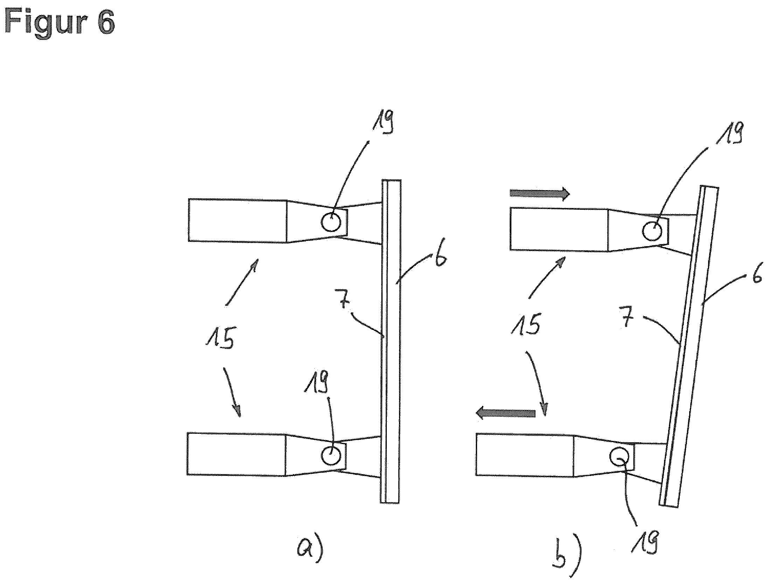

Zusätzlich zur horizontalen sowie auch vertikalen Führung des mechanischen Anschlages 6 sowie der Begrenzungsstruktur 7 besteht die Möglichkeit den Anschlag 6 sowie die stützplattenartig ausgebildete Begrenzungsstruktur 7 an beiden horizontalen Linearführungen 15 drehbar um die vertikale Achse zu lagern. Dies ist in dem Ausführungsbeispiel gemäß Figur 6a und b illustriert. Durch Vorsehen zweier Vertikal-Achsgelenke 19 und die Verwendung von zwei Antrieben z.B. Linearantrieben längs beider horizontalen Linearführungen 15 lässt sich der mechanische Anschlag 6 sowie auch die stützplattenartig ausgebildete Begrenzungsstruktur 7 beliebig schräg anstellen, siehe Figur 6b, um auf diese Weise Stückgüter schonend um die Kippachse zu kippen, die relativ zur Vertikalachse im Stapelverbund 11 verdreht platziert sind.

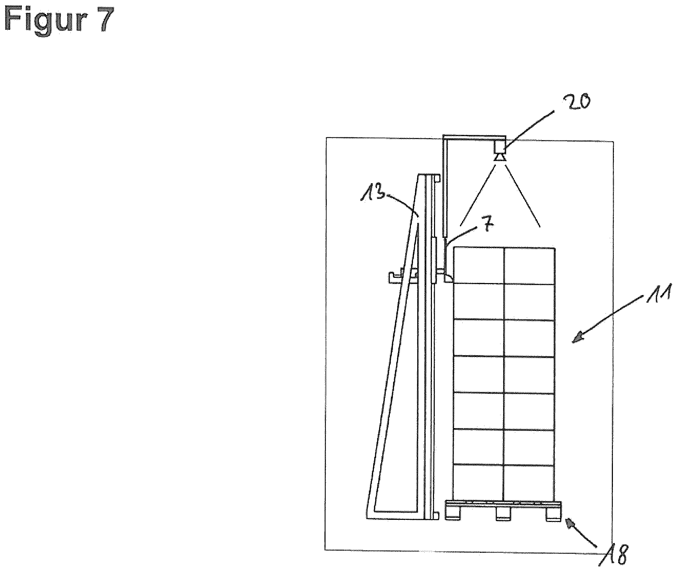

In Figur 7 ist eine Seitenansicht eines Stapelverbundes 11 sowie der profilrahmenartig ausgebildeten Stützstruktur 13 dargestellt, die zusätzlich eine Sensorik 20 vorsieht, die im Ausführungsbeispiel gemäß der Figur 7 raumfest mit der vertikal (z) und horizontal (x) verstellbaren, stützplattenartig ausgebildeten Befestigungsstruktur 7 verbunden ist. Die vorzugsweise in Form einer Kamera ausgebildete Sensorik 20 ermöglicht eine Stückgutlokalisierung und -erfassung relativ zum mechanischen Anschlag 6 und/oder zur Befestigungsstruktur 7. Durch die raumfeste Anordnung von Sensorik 20 und dem mechanischen Anschlag 6 können Unschärfen in den Bildern oder Messwerten vermieden werden.

In den Figuren 8 a bis f sind Bildsequenzen für unterschiedliche Kippvorgänge eines jeweils aufzunehmenden Stückgutes 1 dargestellt, bei denen der Kippvorgang zusätzlich durch eine auf das Stückgut wirkende Saugkraft unterstützt wird.

In den Figuren 8a und b ist zusätzlich zum mechanischen Anschlag 6 und der auf das Stückgut 1 wirkenden Greifvorrichtung 2 eine Saugeinheit 21 dargestellt, die an einem aktiv linearen Stellelement 22 horizontal verfahrbar angeordnet ist. Vor Beginn des Aufwälzprozesses wird das Stückgut 1 im Bereich Oberhalb der Kippkante 6 an der Rückseite 8 mit der Saugeinheit 21 angesaugt. Hierzu dient das aktive lineare Stellelement 22, das die Saugeinheit 21 an das Stückgut 1 rückseitig andrückt. Vor und während des Aufwälzprozesses wird mit dem aktiven linearen Stellelement 22 eine konstante Zugkraft auf das Stückgut 1 ausgewirkt. Somit wird durch die Saugeinheit 21 ein Kippmoment ausgeübt und der Aufwälzprozess erheblich erleichtert. Im Falle der Figuren 8a und b ist der mit Hilfe der pneumatischen Saugeinheit 21 unterstützte Kippvorgang in Verbindung mit einem räumlich fest positionierten, mechanischen Anschlag 6 sowie dem als Aufwälzgreifer ausgebildeten Greifvorrichtung 2 illustriert. Neben der den Kippvorgang unterstützenden Saugwirkung sichert die pneumatische Saugeinheit 21 das Stückgut vor einem Überkippen um die Kippachse KA, so dass auf eine zusätzliche Befestigungsstruktur 7 verzichtet werden kann.

Die den Kippvorgang unterstützende pneumatische Saugeinheit 21 lässt sich auch in Verbindung mit einem drehbar gelagerten mechanischen Anschlag 6, siehe die Figuren 8c und d, realisieren. Gleichsam, wie in dem bereits erläuterten Ausführungsbeispiel gemäß Figur 2a und b, können Relativbewegungen zwischen dem mechanischen Anschlag 6 und dem aufzunehmenden Stückgut 1 aufgrund der drehbaren Lagerung vermittels des Ein-Achsdrehlagers 10 vermieden werden.

Zudem lässt sich das Ausführungsbeispiel gemäß Figur 2c mit einer, über mehrere einzelne Saugelemente verfügenden Saugeinheit 21 kombinieren, die möglichst flächig verteilt auf der schwenkbar gelagerten plattenförmig ausgebildeten Begrenzungsstruktur 7 angebracht sind (Figur 8 e und f).

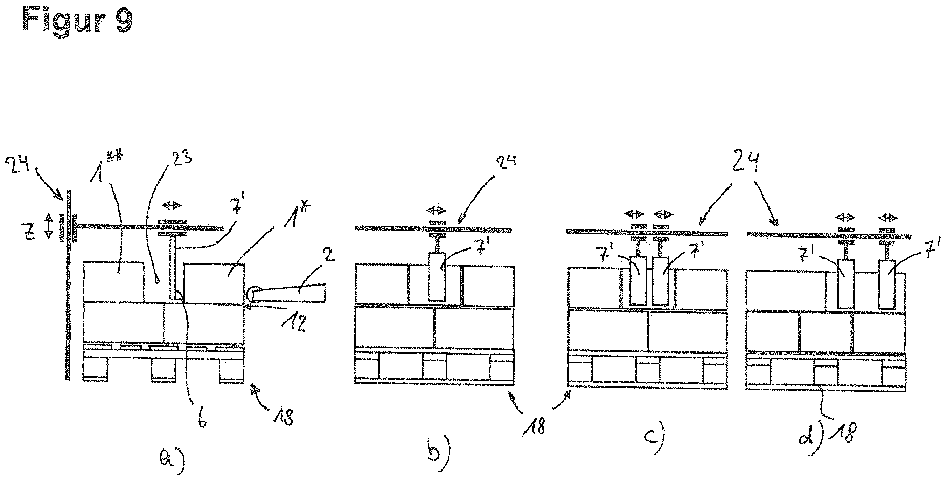

Auf manchen Paletten 18, siehe Fig. 9 a, ist das Lage- bzw. Anordnungsmuster der zu einem Stapelverbund 11 zusammengefügten Stückgüter 1 so ausgeführt, dass Kamine 23 bzw. Lücken zwischen den einzelnen Stückgütern 1 auftreten. In solchen Fällen werden vordere Stückgüter 1* nicht durch hintere Stückgüter 1** innerhalb einer Stapelebene 12 gestützt. Dadurch kann keine Gegenkraft von Seiten der Rückwand an die jeweils vorderen, zu entnehmenden Stückgüter weitergeleitet werden. In diesem Fall würden die Stückgüter längs der Stapelebene 12 während des Aufnahmevorganges durch die Greifvorrichtung nach hinten geschoben, wodurch die einzelnen Stückgüter Schaden nehmen können. In diesem Fall bietet es sich an, die Befestigungsstruktur 7 sowie den mechanischen Anschlag 6 als eine schmale Baueinheit auszuführen und an einer räumlichen Positioniereinheit 24 anzubringen, die es ermöglicht, den mechanischen Anschlag 6 in derartigen Kaminen 23 bzw. Lücken an geeigneter Position und Stelle vertikal (z) abzusenken, so dass der mechanische Anschlag 6 längs der hinteren Unterkante 5 des jeweils aufzunehmenden Stückgutes angebracht werden kann. Die in Figur 9a in Seitenansicht dargestellte schwertartig ausgebildete Befestigungsstruktur 7', an deren Unterkante der mechanische Anschlag 6 angebracht ist, ist in den Figuren 9b, c und d in einer Ansicht von hinten dargestellt, die die schlanke Bauform der Befestigungsstruktur 7' illustriert und zudem eine Positioniermöglichkeit längs der Kippachse KA (y) des mechanischen Anschlages 6 darstellt. Zudem kann eine derartig schwertartig ausgebildete Befestigungsstruktur 7' oder können mehrere derartige schwertartig ausgebildete Befestigungsstrukturen 7' zum Zwecke der Entnahme einzelner Stückgüter längs der Positioniereinheit 24 angeordnet sein, um auf diese Weise Stückgüter 1 unterschiedlicher Breite, Höhe, Tiefe individuell zum Zwecke des Kippvorganges zu unterstützen.

### Bezugszeichenliste

- 1: Stückgut
- 2: Greifvorrichtung
- 3: Reibschlusselement
- 4: Vorderseite
- 5: hintere Unterkante
- 6: mechanischer Anschlag
- 7: Begrenzungsstruktur
- 7': schwertartige Begrenzungsstruktur
- 8: Rückseite
- 9: Abstand
- 10: Ein-Achsdrehlager
- 11: Stapelverbund
- 12: Stapelebene
- 13: Stützstruktur
- 14: vertikale Führungsschiene
- 15: horizontale Führungsschiene
- 16: Überstand
- 17: Unterstand
- 18: Palette
- 19: Vertikalachsgelenk
- 20: Sensorik
- 21: pneumatisches Saugelement
- 22: aktiv lineares Stellelement
- 23: Kamin/Lücke
- 24: Positioniereinheit
- KA: Kippachse

## Patentansprüche

1. Vorrichtung zum Entpalettieren von in einem stationären Stapelverbund (11) längs einzelner Stapelebenen (12) angeordneten Stückgütern (1), mit einer räumlich zum Stapelverbund (11) positionierbaren Greifvorrichtung (2), die durch einseitige Ineingriffnahme mit einem Stückgut (1) und nachfolgendem Ankippen und Unterfahren des Stückgutes (1) zur vereinzelten Stückgutaufnahme befähigt ist,
wobei ein räumlich positionierbarer, mechanischer Anschlag (6) vorgesehen ist, der jeweils an einem aufzunehmenden Stückgut (1) gegenüberliegend zur Greifvorrichtung (2) im Bereich der Stapelebene (12) des Stückgutes (1) positionierbar und mit dem Stückgut (1) zur Anlage bringbar und derart ausgebildet ist, dass bei Ineingriffnahme der Greifvorrichtung (2) mit dem Stückgut (1) und gleichzeitigem mechanischen Zusammenwirken zwischen Stückgut (1) und dem Anschlag (6) ein um eine durch den mechanischen Anschlag (6) vorgegebene Kippachse (KA) orientiertes Kippmoment auf das Stückgut (1) wirkt, wobei der Anschlag (6) leistenförmig ausgebildet ist und eine Leistenlängserstreckung aufweist,
**dadurch gekennzeichnet, dass**
eine unmittelbar hinter dem Stapelverbund (11) angeordnete Stützstruktur (13) vorgesehen ist, an der höhen-(z) sowie auch horizontalverstellbar (x) der mechanische Anschlag (6) sowie eine daran fest angebrachte Begrenzungsstruktur (7) angebracht sind,
wobei die Stützstruktur (13) aus einem Rahmengestellt besteht, dessen Größe und Form mit einem entsprechenden Übermaß an die Größe und Form des Stapelverbundes (11) angepasst ist,
wobei die profilrahmenartig ausgebildete Stützstruktur (13) derart groß dimensioniert ist, so dass der auf einer Palette (18) angeordnete Stapelverbund (11) durch die Stützstruktur (13) hindurch gefahren werden kann, sofern der mechanische Anschlag (6) sowie die stützplattenartig ausgebildete Begrenzungsstruktur (7) in eine höchste vertikale Position verfahren ist.

2. Vorrichtung nach Anspruch 1,
**dadurch gekennzeichnet, dass** die Begrenzungsstruktur (7) mit dem Anschlag (6) derart kombiniert ist, dass die Begrenzungsstruktur (7) relativ zum Anschlag (6) der Greifvorrichtung (2) gegenüberliegend derart angeordnet ist, dass ein ungekipptes Stückgut (1) zumindest durch den Anschlag (6) von der Begrenzungsstruktur (7) beabstandet ist und ein gekipptes Stückgut (1) an der Begrenzungsstruktur (7) anstößt und den Kippvorgang begrenzt.

3. Vorrichtung nach Anspruch 2,
**dadurch gekennzeichnet, dass** die Begrenzungsstruktur (7) in Form einer Begrenzungswand ausgebildet ist.

4. Vorrichtung nach einem der Ansprüche 1 bis 3,
**dadurch gekennzeichnet, dass** die Begrenzungsstruktur (7) als separate Baueinheit zum räumlich positionierbaren, mechanischen Anschlag (6) angeordnet ist, oder dass die Begrenzungsstruktur (7) fest an dem mechanischen Anschlag (6) angebracht und mit diesem gemeinsam räumlich positionierbar ist.

5. Vorrichtung nach Anspruch 1,
**dadurch gekennzeichnet, dass** der leistenförmig ausgebildete mechanische Anschlag (6) drehbar um eine in Leistenlängserstreckung orientierte Drehachse an der Stützstruktur (13) angebracht ist.

6. Vorrichtung nach einem der Ansprüche 1 bis 5,
**dadurch gekennzeichnet, dass** wenigstens ein Sensor (20) zur Relativlageerfassung zwischen wenigstens einem aufzunehmenden Stückgut (1) aus dem Stapelverbund (11) und dem mechanischen Anschlag (6) vorgesehen ist, dessen Sensorsignale einer Kontrolleinheit zuführbar sind, die die räumliche Positionierung des mechanischen Anschlages (6) überwacht.

7. Vorrichtung nach Anspruch 6,
**dadurch gekennzeichnet, dass** der wenigstens eine Sensor (20) ein Sensor der nachfolgenden Art ist:
optischer, schallakustischer, kapazitiver oder induktiver Abstandssensor, räumlich auflösender Bildsensor, Drucksensor, Motorstromdetektor.

8. Vorrichtung nach einem der Ansprüche 1 bis 7,
**dadurch gekennzeichnet, dass** wenigstens ein pneumatisches Saugelement (21) derart ausgebildet und angeordnet ist und mit der Greifvorrichtung (2) zusammenwirkt, dass das Saugelement (21) beabstandet zur Auflageebene das aufzunehmende Stückgut (1) gegenüberliegend zur Greifvorrichtung (2) kontaktiert und eine das Kippmoment unterstützende Zugkraft auf das Stückgut (1) ausübt.

9. Vorrichtung nach einem der Ansprüche 1 bis 8,
**dadurch gekennzeichnet, dass** die Greifvorrichtung (2) in Art eines Aufwälzgreifers ausgebildet ist.

## Claims

1. Device for depalletizing piece goods (1) arranged in a stationary stack arrangement (11) along individual stacking levels (12), with a gripping device (2) that can be positioned in space relative to the stack arrangement (11) and is capable of picking up piece goods individually by engaging one side of the piece good (1) and then tilting and moving under the piece good (1),
wherein a spatially positionable, mechanical stop (6) is provided which can be positioned opposite the respective gripping device (2) on a piece good (1) to be picked up in the area of the stacking plane (12) of the piece good (1) and can be brought to bear on the piece good (1) and is designed in such a way that upon engagement of the gripping device (2) with the piece good (1) and simultaneous mechanical interaction between piece good (1) and the stop (6), a tilting moment orientated about a tilt axis (KA) defined by the mechanical stop (6) acts on the piece good (1), wherein the stop (6) is in the form of a strip and has a longitudinal strip extension,
**characterized in that**
a support structure (13) arranged immediately behind the stack arrangement (11) is provided, on which the mechanical stop (6) as a delimitation structure (7) attached permanently thereto are mounted so as to be adjustable both vertically (z) and horizontally (x),
wherein the support structure (13) consists of a frame, whose size and shape is adapted to the size and shape of the stack arrangement (11) with a corresponding oversize,
wherein the support structure (13) constructed in the manner of a profile frame is dimensioned with such a size that the stack arrangement (11) arranged on a pallet (18) can be moved through the support structure (13), if the mechanical stop (6) and the delimitation structure (7) designed in the form of a support plate has been raised to a highest vertical position.

2. Device according to Claim 1,
**characterized in that** a delimitation structure (7) is combined with the stop (6) in such a way that the delimitation structure (7) is arranged opposite the gripping device (2) relative to the stop (6) in such a way that an untilted piece good (1) is separated from the delimitation structure (7) at least by the stop (6), and a tilted piece good (1) abuts the delimitation structure (7) and limits the tilting process.

3. Device according to claim 2,
**characterized in that** the delimitation structure (7) is constructed in the form of a delimitation wall.

4. Device according to any one of Claims 1 to 3,
**characterized in that** the delimitation structure (7) is arranged as a separate structural unit from the spatially positionable mechanical stop (6), or that the delimitation structure (7) is fixedly attached to the mechanical stop (6) and can be positioned in space together therewith.

5. Device according to Claim 1,
**characterized in that** the mechanical stop (6) designed in the form of a strip is attached to the support structure (13) so as to be rotatable about an axis of rotation orientated in the longitudinal strip extension.

6. Device according to any one of Claims 1 to 5,
**characterized in that** at least one sensor (20) is provided for detecting the relative position between at least one piece good (1) to be picked up from the stack arrangement (11) and the mechanical stop (6), the sensor signals of which can be fed to a control unit which monitors the spatial positioning of the mechanical stop (6) .

7. Device according to Claim 6,
**characterized in that** the at least one sensor (20) is a sensor of the following type:
optical, acoustic, capacitive or inductive distance sensor, spatially resolving image sensor, pressure sensor, motor current detector.

8. Device according to any one of Claims 1 to 7,
**characterized in that** at least one pneumatic suction element (21) is designed and arranged and interacts with the gripping device (2) in such a way that the suction element (21), contacts the piece good (1) to be picked up opposite the gripping device (2) at a distance from the support plane, and exerts a tensile force on the piece good (1) that supports the tilting moment.

9. Device according to any one of Claims 1 to 8,
**characterized in that** the gripping device (2) is designed in the manner of a roll-on gripper.

## Revendications

1. Dispositif de dépalettisation de marchandises en vrac (1) disposées dans un empilement stationnaire (11) le long de plans d'empilement individuels (12), avec un dispositif de préhension (2) positionnable dans l'espace par rapport à l'empilement (11), qui est apte à une réception de marchandise isolée par mise en prise unilatérale avec une marchandise en vrac (1) et basculement et glissement en dessous ultérieur de la marchandise en vrac (1),
sachant qu'une butée mécanique (6) positionnable dans l'espace est prévue, qui peut être positionnée respectivement sur une marchandise en vrac (1) à loger à l'opposé du dispositif de préhension (2) dans la zone du plan d'empilement (12) de la marchandise en vrac (1) et peut être mise en appui avec la marchandise en vrac (1) et est constituée de telle manière que lors de la mise en prise du dispositif de préhension (2) avec la marchandise en vrac (1) et de l'interaction mécanique simultanée entre la marchandise en vrac (1) et la butée (6) un couple de basculement orienté autour d'un axe de basculement (KA) prédéfini par la butée mécanique (6) agit sur la marchandise en vrac (1), sachant que la butée (6) est constituée sous la forme d'une barrette, et comporte une extension longitudinale de barrette,
**caractérisé en ce qu'**
une structure de support (13) disposée directement derrière l'empilement (11) est prévue, sur laquelle sont disposées réglables en hauteur (z) ainsi qu'horizontalement (x), la butée mécanique (6) et une structure de délimitation (7) montée fixement dessus, sachant que la structure de support (13) est composée d'un châssis de cadre, dont la taille et la forme sont adaptées avec une surmesure correspondante à la taille et à la forme de l'empilement (11),
sachant que la structure de support (13) constituée à la manière d'un cadre profilé est dimensionnée en taille de telle sorte que l'empilement (11) disposé sur une palette (18) peut être déplacé à travers la structure de support (13) dans la mesure où la butée mécanique (6) ainsi que la structure de délimitation (7) constituée à la manière d'une plaque de support sont déplacées dans une position verticale maximale.

2. Dispositif selon la revendication 1,
**caractérisé en ce que** la structure de délimitation (7) est combinée avec la butée (6) de telle manière que la structure de délimitation (7) est disposée par rapport à la butée (6) à l'opposé du dispositif de préhension (2) de telle sorte qu'une marchandise en vrac (1) non basculée est maintenue à distance de la structure de délimitation (7) au moins par la butée (6) et une marchandise en vrac (1) basculée vient heurter la structure de délimitation (7) et limite l'opération de basculement.

3. Dispositif selon la revendication 2, c
aractérisé en ce que la structure de délimitation (7) est constituée sous la forme d'une paroi de délimitation.

4. Dispositif selon l'une quelconque des revendications 1 à 3,
**caractérisé en ce que** la structure de délimitation (7) est disposée sous la forme d'une unité de construction séparée par rapport à la butée mécanique (6) positionnable dans l'espace ou **en ce que** la structure de délimitation (7) est montée fixe sur la butée mécanique (6) et peut être positionnée dans l'espace en commun avec celle-ci.

5. Dispositif selon la revendication 1,
**caractérisé en ce que** la butée (6) mécanique constituée en forme de barrette est placée sur la structure de support (13), pouvant tourner autour d'un axe de rotation orienté dans l'extension longitudinale de barrette.

6. Dispositif selon l'une quelconque des revendications 1 à 5,
**caractérisé en ce qu'**au moins un capteur (20) pour la saisie de la position relative entre au moins une marchandise en vrac (1) à loger d'un empilement (11) et la butée mécanique (6) est prévu, dont les signaux de détection peuvent être acheminés à une unité de contrôle, qui surveille le positionnement spatial de la butée mécanique (6).

7. Dispositif selon la revendication 6,
**caractérisé en ce que** au moins un capteur (20) est au moins un capteur du type ci-après :
capteur de distance optique, acoustique, capacitif ou inductif, capteur d'image à résolution spatiale, capteur de pression, capteur de courant moteur.

8. Dispositif selon l'une quelconque des revendications 1 à 7,
**caractérisé en ce qu'**au moins un élément d'aspiration pneumatique (21) est constitué et disposé et coopère avec le dispositif de préhension (2) de telle manière que l'élément d'aspiration (21) est en contact avec la marchandise en vrac (1) à loger à distance du plan de dépose à l'opposé du dispositif de préhension (2) et exerce une force de traction sur la marchandise en vrac (1) soutenant le couple de basculement.

9. Dispositif selon l'une quelconque des revendications 1 à 8,
**caractérisé en ce que** le dispositif de préhension (2) est constitué à la manière d'une pince de préhension roulante.
